Europäisches Patentamt

European Patent Office

Office européen des brevets

(11) Publication number: **0 235 303 B1**

# EUROPEAN PATENT SPECIFICATION

(45) Date of publication of patent specification: **19.05.93**  (51) Int. Cl.5: **G06F 1/04**

(21) Application number: **86905405.6**

(22) Date of filing: **04.09.86**

(86) International application number:
**PCT/JP86/00450**

(87) International publication number:
**WO 87/01479 (12.03.87 87/06)**

(54) **SYSTEM FOR ADJUSTING CLOCK PHASE.**

(30) Priority: **04.09.85 JP 195171/85**

(43) Date of publication of application:
**09.09.87 Bulletin 87/37**

(45) Publication of the grant of the patent:
**19.05.93 Bulletin 93/20**

(84) Designated Contracting States:
**DE FR GB IT NL**

(56) References cited:
**EP−A− 0 117 735**
**GB−A− 2 010 552**
**GB−A− 2 050 644**
**JP−A− 58 218 229**
**JP−A− 60 697 22**

(73) Proprietor: **FUJITSU LIMITED**
**1015, Kamikodanaka Nakahara−ku**
**Kawasaki−shi Kanagawa 211(JP)**

(72) Inventor: **YOSHIMURA, Tatsuro**
**Koito Haitsu 102 774, Shinmaruko Higashi**
**1−chome**
**Nakahara−ku Kawasaki−shi Kanagawa**
**211(JP)**

(74) Representative: **Billington, Lawrence Emlyn et al**
**HASELTINE LAKE & CO Hazlitt House 28**
**Southampton Buildings Chancery Lane**
**London WC2A 1AT (GB)**

# Description

The present invention relates to a clock phase adjusting system; more particularly, to a system for adjusting a clock signal in an information processing system.

Usually, major functions of an information processing system such as operational processing, information holding, etc., in a central processing unit (hereinafter called CPU) can be achieved by a logic circuit formed by semiconductor elements.

This logic circuit is realised by combining many combination circuits, such as OR/NOR gates, and sequential circuits formed by registers, latches, flip-flops (hereinafter called FF), etc., by a plurality of combination circuits.

The above-mentioned combination circuits produce an output signal only after an operation delay time in each constituent element, but in sequential circuits an output signal is produced after the input data is set by a clock signal after the input data is applied.

In a typical CPU, etc., as is well known, usually a synchronising system using a clock signal having a constant period is used.

Recently, in accordance with the spread and development of information processing systems, devices must be manufactured with small size and at a low cost. On the other hand, if an improvement in throughput of the processor is required, then a system having a high speed and large scale is necessary.

Conventionally, a high-speed and large-scale information processing system is obtained by improvements in system design, high-speed semiconductor elements, and better integration techniques, i.e. the use of a large-scale integration circuit (LSI).

The LSI provides high integration with a low cost, and allows the above-mentioned logic circuits to be realised with uniform operational characteristics and high reliability.

A high-speed and large-scale system is, however, formed by the above-mentioned combination circuits using a large number of semiconductor elements. Therefore, because many semiconductor elements are integrated in the logic circuit, and these elements inevitably have varying operational characteristics, especially operation time, there is an inevitable slight effect on a margin of a clock signal timing in the CPU, etc.

Further, the high speed of the information processing system becomes such that delay times due to wiring lengths cannot be neglected. Therefore, in the present state of the art, clock signals for the logic circuit are obtained by distributing a plurality of clock signals each having a predetermined delay time via a so-called phase adjusting circuit.

In this case, in the circuit which distributes the delayed clocks, a clock delay specific to each logic circuit is required. Therefore, in the above-mentioned phase adjusting circuit, a clock signal having a desired delay period must be supplied individually for every logic circuit requiring a clock.

However, in an LSI having a conventional phase adjusting circuit, the number of gates included therein is restricted, as is the number of external output terminals on a printed circuit board for mounting the LSI. From this point of view, the number n of terminals of the above-mentioned phase adjusting circuit should be kept low, and a problem arises of a conflict in the co-existence of such a circuit in the LSI.

Further, from the viewpoint of the package, such as a high-density package of a printed circuit board for mounting the LSI, it is desirable from the viewpoint of reliability that changing of the connections in the selected terminal need not be carried out.

That is:-

(a) if a connection change is attempted by a short circuit, space for the short circuit is required in the package, and the package efficiency is decreased;

(b) if the connection change is attempted by a wiring change, the operating efficiency is decreased; and

(c) the short circuit or wiring change causes a problem in the reliability of the connecting terminal.

GB-A-2 010 552 discloses a clock pulse circuit having the features of the preamble of accompanying claim 1. In this circuit, a fine adjustment unit has a similar structure to a coarse adjustment unit. There is no particular relationship between the coarse and fine delay steps.

EP-A-0 117 735 discloses a computer control system wherein working values are stored in a read-only memory, and are read into a random access memory every time the system is switched on.

According to the present invention, there is provided a clock phase adjusting system, comprising:-

delay means connected to receive an input clock signal, for delaying the input clock signal by a selected time in accordance with a given delay time selection signal and for outputting a delayed clock signal, said delay means including:-

first delay means for coarse adjustment, said first delay means selectively outputting the input clock signal in accordance with an n-bit selection signal, wherein n is an integer greater than or equal to one, as a first delay clock signal;

second delay means for fine adjustment, said first and second delay means connected in cascade, said second delay means selectively outputting the first delay clock signal in accordance with a p-bit selection signal, wherein p is an integer greater than or equal to one, as said delayed, clock signal having the selected delay time;

n+p scan in/out latch circuit, connected to said delay means for providing said delay time selection signal to said delay means; and

means connected to said scan in/out latch circuits, for applying a setting signal and for setting selection data corresponding to said delay time selection signal to said n+p scan in/out latch circuits during a scan-in operation;

characterised in that:-

said first delay means produces said first delay clock signal having a delay in a range of m = $2^n$ steps in accordance with the n-bit selection signal, and said second delay means produces said delayed clock signal having a further delay in a range of $2^p$ steps each $1/2^p$ of the size of the steps in the first delay means, in accordance with the p-bit selection signal;

and in that:-

memory means are provided for inputting and outputting selection data for said first and second delay means in accordance alternatively either with an address signal which is input via another scan in/out latch circuit other than said n+p scan in/out latch circuits or an address signal which is input for a special purpose; and wherein, at the time of a scan-in operation in said logic circuit, said selection data which is output by an address signal for said memory means is set in said n+p scan in/out latch circuits.

In view of the above-mentioned conventional drawbacks, it is desirable to provide a clock phase adjusting system capable of an efficient co-existence in the LSI without restricting a decrease in delay time tp or a number of delay values n provided. Accordingly, an embodiment of the invention provides a phase adjusting system which uses scan in/out means provided, e.g. for easily locating a fault position in a logic circuit, so that the number of terminals required is kept to a minimum, and which carries out the selection of terminals for adjusting the phase.

In embodiments of the invention, when the phase of the clock signal is adjusted, selection of a selection adjusting terminal for m steps corresponding to coarse adjustment is obtained by a first delay means, in which a selection signal having n bits is scanned in the form of m = $2^n$ to n scan out circuits for latching. For fine adjustment within one step, the selection of a $1/2^p$ step is obtained by a second delay means in which p bits are latched to p scan in/out registers, and as a result, a delay clock signal in $1/2^p$ steps can be obtained across the range of 0 to $(m - 1/2^p)$.

Further, if the present invention is commonly applied to a scan in/out means in the logic circuit for scanning the selected data for phase adjusting, it is not necessary to provide a special terminal for applying the select data for the phase adjusting, and thus the phase adjusting circuit can co-exist with the logic circuit of the LSI.

Further, if the selected data which is first sent to a second delay means mentioned above for adjusting the phase is realised by, for example, firmware, a clock phase adjusting system having a high reliability can be included in the high-density package without a wiring change.

Reference is made, by way of example, to the accompanying drawings in which:-

Figs. 1A and 1B are diagrams showing one example of a conventional clock phase adjusting system;

Figs. 2A and 2B are diagrams showing clock phase adjusting systems useful for understanding the present invention;

Figs. 3A, 3B and 3C are diagrams showing the construction of examples of a first delay portion and a second delay portion in a clock phase adjusting system of the present invention; and

Figs. 4A and 4B are block diagrams of two embodiments of the system according to the present invention.

Before describing embodiments of the present invention, a conventional phase adjusting system will be explained.

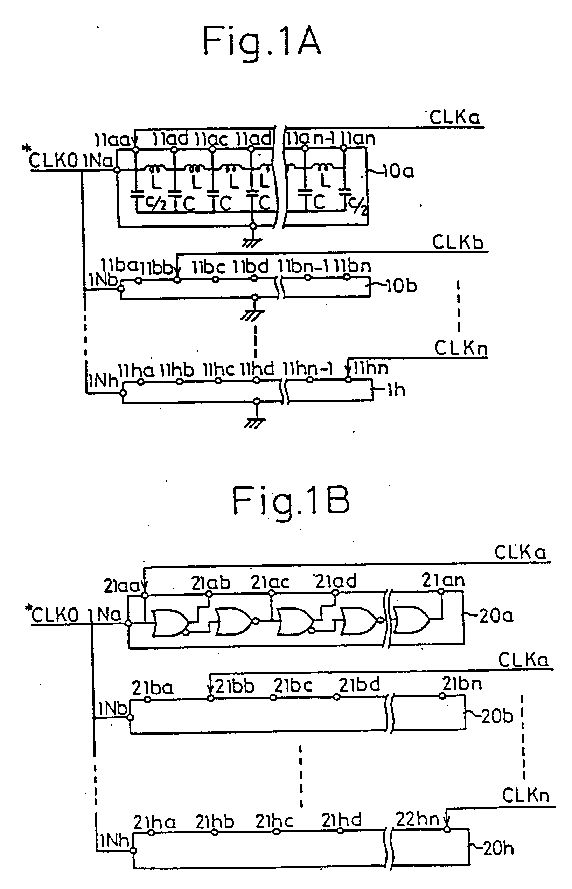

Fig. 1A is an example of a phase adjusting circuit using an inductive line (L) and a capacitance (C), and Fig. 1B is an example of a phase adjusting circuit using OR/NOR gates.

In the phase adjusting circuits 10a to 10h shown in Fig. 1A, cascade delay times between each unit section of L and C are based on a constant, or a distributed constant is selected by adjusting terminals 11aa to 11an, ..., 11ha to 11hn. Clocks CLKa to CLKh having respective predetermined delay times are output in response to a standard clock signal *CLK0 at the input. Here, CLKa has approximately zero delay.

In the phase adjusting circuit 20a to 20h shown in Fig. 1B, cascade delay times using a plurality of OR/NOR gates are selected by making connections to terminals 21aa to 21hn.

These gates logically function as part of the phase adjusting circuit, but when included in an LSI, the main logic circuit (CPU) can also use such OR/NOR gates. Therefore, the Fig. 1B type adjusting circuits 20a to 20h are often used in practice for reasons of convenience. When using the Fig. 1B type circuits 20a to 20h for phase adjustment, a "pitch" (step) of the delay time tp per gate is determined by the delay time of the gate which is used. Preferably, the pitch should be made as small as possible and the range of the adjusting time should be made large. Thus, the number n of the adjusting terminals must also be made large, from the relationship: –

$$T = tp \cdot n.$$

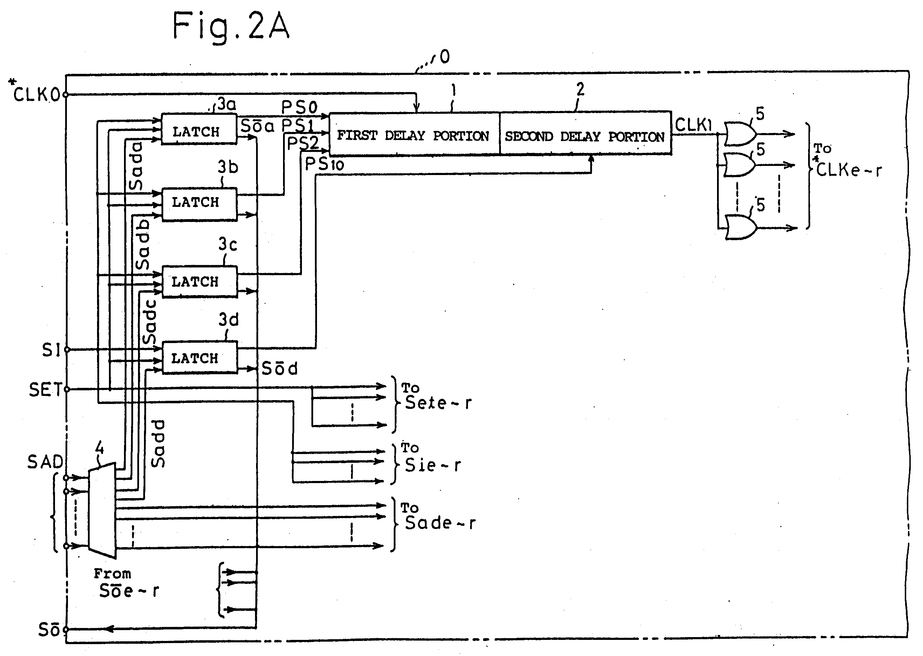

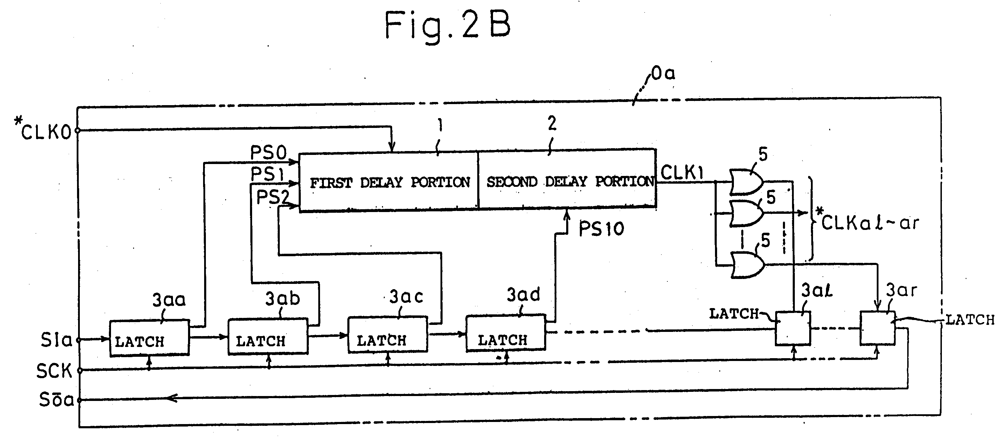

Figs. 2A and 2B are block diagrams of clock phase adjusting systems useful for understanding the invention. In the phase adjust system shown in Fig. 2A, input of selection data for setting the delay time given to a basic input clock signal *CLK0 is realised by a scan – in via an address system (parallel system). Fig. 2B shows a system in which the input of the selection data is realised by a scan – in via a shift register system (series system). Note, throughout the drawings, the same symbols designate the same elements.

In Figs. 2A and 2B, 0, 0a are an information processing device, or an intermediate package body of a sub – unit of the information processing device, such as an assembly of a printed circuit board or LSI (hereinafter called the device).

Further, in the scan – in operation by the above – mentioned series/parallel system, it is assumed that a small number of scan in/out latch circuits 3a to 3d, 3aa to 3ad are added to the scan in/out function of the conventional device 0, 0a, and the scan in/out function of a conventional device is used as it is.

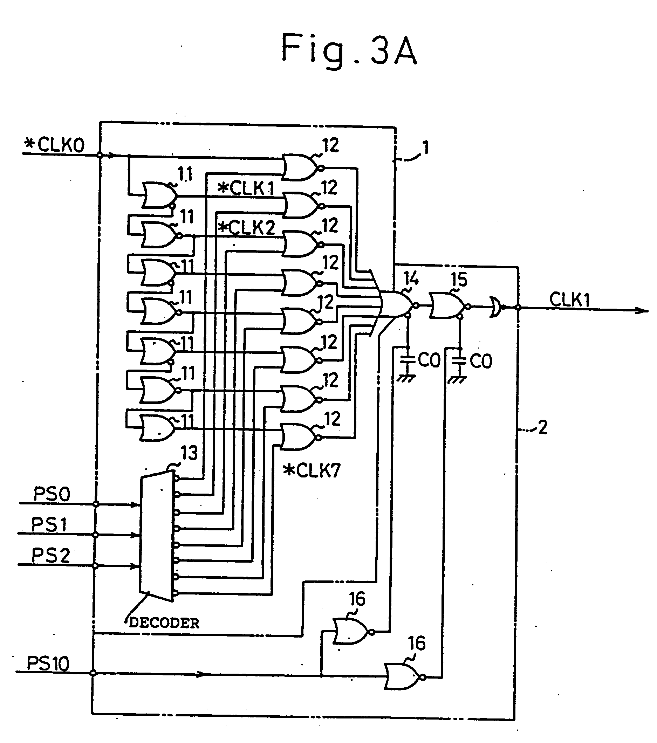

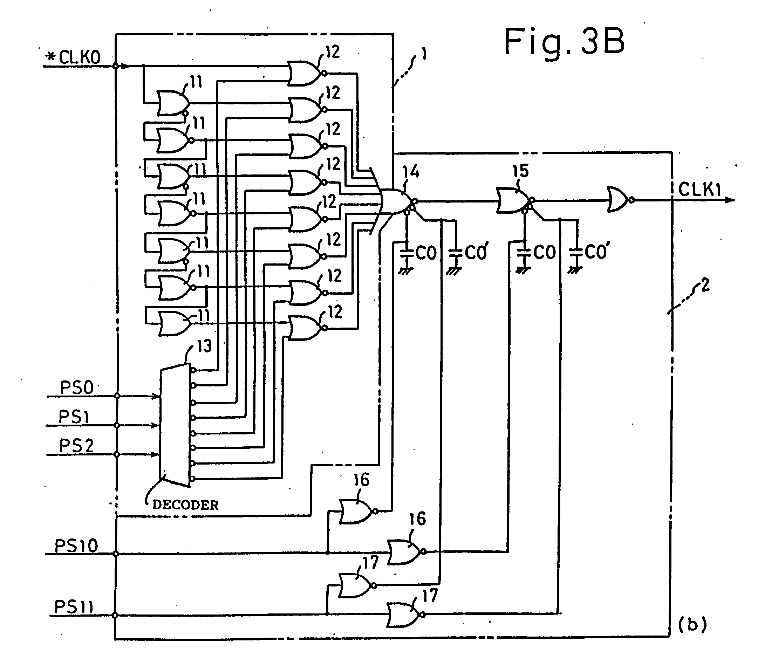

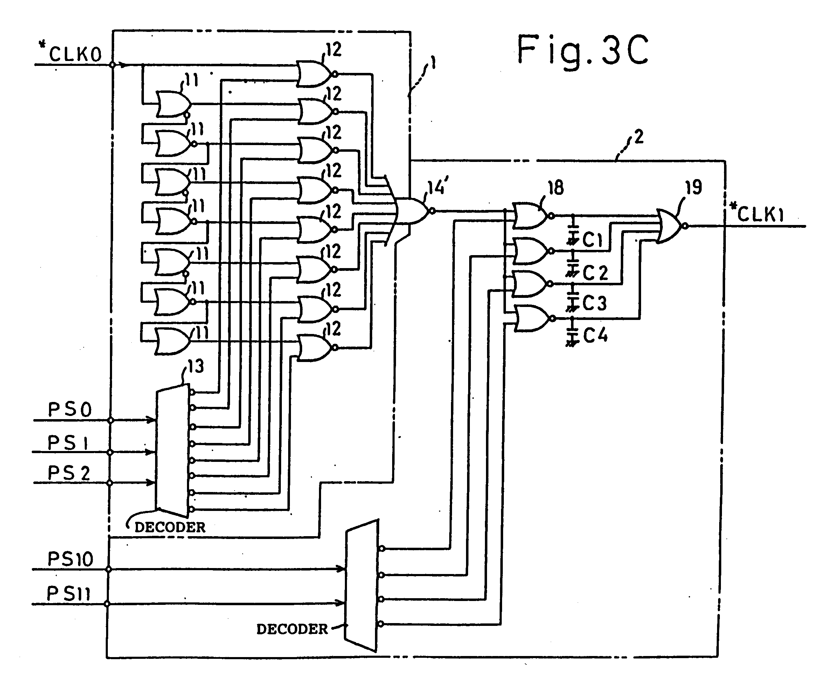

Figs. 3A, 3B and 3C are diagrams of examples of constructions of a first delay portion and of a second delay portion connected to the first delay portion, applicable to the present invention.

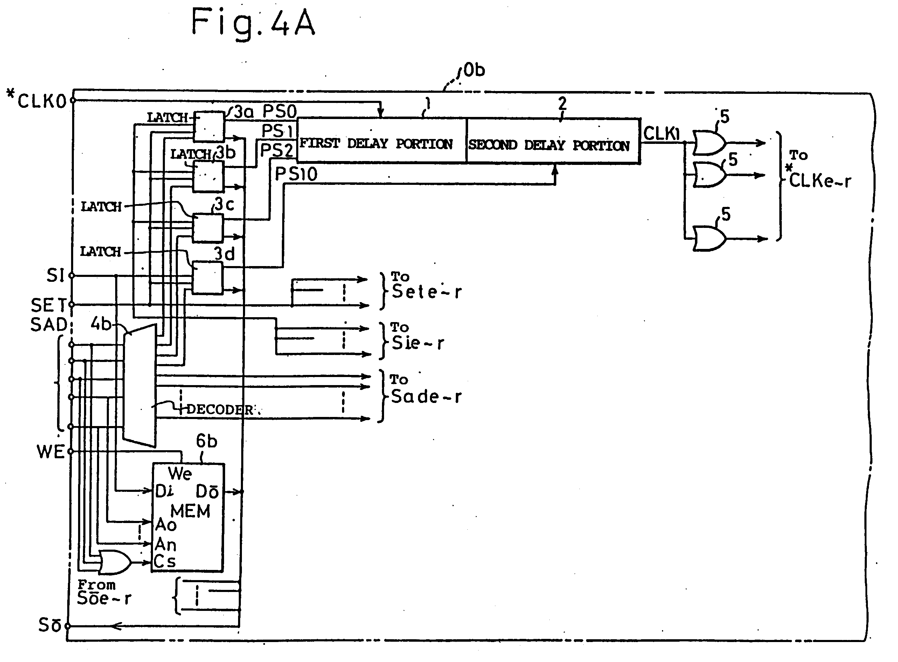

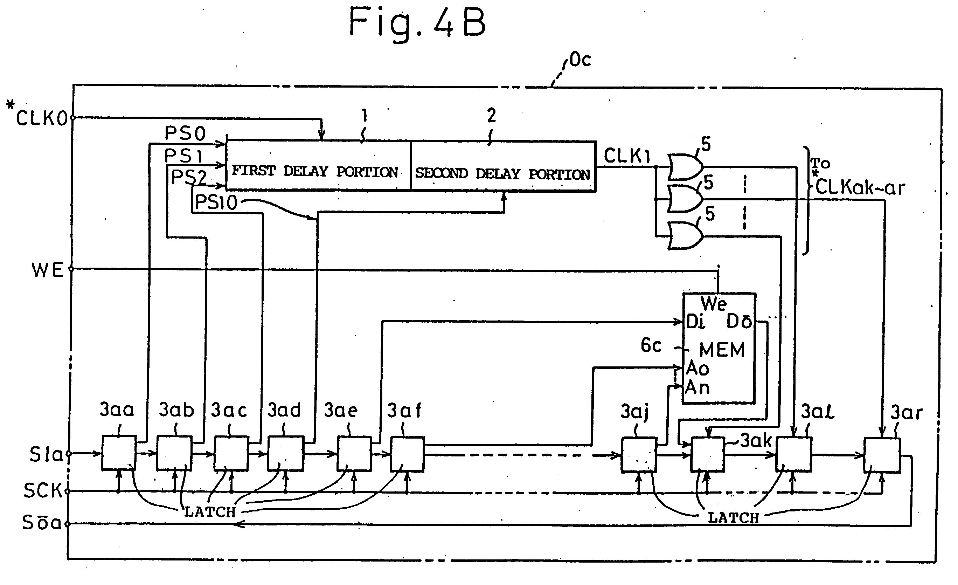

Further, Figs. 4A and 4B are block diagrams of embodiments of the present invention, to which the delay portions of Figs. 3A to 3C can be applied.

First, in Fig. 3A, a clock signal which is input to the *CLK0 terminal of the first delay portion 1 is input to (m – 1) cascaded OR/NOR gates 11, and each input and output signal is applied to m OR gates 12, wherein m = 8 for example. Next, "0" is output at one of 2n (here, 8) terminals of a decoder 13, in response to an n – bit (here, 3 – bit) phase adjusting signal PS0 to PS2. The selected delay signal from the NOR – gate series 11 is selected by the NOR gate 12 and output by a NOR gate 14.

At this time, the second delay portion 2, the commonly – used NOR gate 14, and the NOR gate 15 of the second delay portion 2 function to output, unmodified, one of the clock signals *CLK0 to *CLK7 delayed by from zero to seven steps from *CLK0, as determined by the phase adjusting signal PS0 to PS2. This occurs if a phase adjusting signal of another p bits (here, a one – bit signal PS10), applied to the second delay portion 2, is maintained at "0".

On the other hand, if the adjusting signal PS10 for the second delay portion 2 is input as "1", a further delay time, for example 0.5 step, can be added to the step delay signals *CLK0 to *CLK7 from the first delay portion 1. This further delay results from a delay means formed by inserting a capacitor Co (for example, several pF) at an emitter follower output terminal which is connected parallel to a base of the output transistor forming an emitter follower of an internal connecting element in the NOR gate 14 and 15 outputting the above – mentioned *CLK0 to *CLK7, as shown. For example, this is constituted by an emitter coupled logic circuit (ECL).

Details of such a delay portion providing a 0.5 step extra delay are disclosed in Japanese Patent Application No. 59 – 158208 "Phase Variable Circuit" filed by the present applicant, and therefore an explanation thereof will be omitted. The phase adjustment due to the first and second delay portions can produce, when the delay time per one NOR gate 11 of the first delay portion 1 is ts, a selection clock signal CLK1 set at any $1/2^p$ step in the range from a minimum 0 to a maximum $(m - 1/2^p)$, where for example p = 1 and a total n + p = 4 – bits selection signal (PS0, PS1, PS2, PS10) is employed.

The above explanation is given for the case p = 1, where p is the bit – number of selection signals for the second delay portion. The case where p is greater than one is explained in Fig. 3B.

In Fig. 3B, compared with Fig. 3A, a selection signal PS11 and a NOR gate 17 corresponding to the selection signal PS11 are added. Moreover, one output is added for the NOR gates 14, 15, as well as a capacitance C0', which is commonly connected to the output of the NOR gate 17.

This capacitance C0' has a similar function to that of the aforementioned capacitance C0, but the value of the capacitance is varied so that the variable step width is 0.25 step.

Accordingly, by using PS10 and PS11 in the second delay portion 2, 0 to 0.75 steps of delay can be added at 0.25 step intervals.

Further, in addition to the circuits already mentioned, a person skilled in the art will realise that a circuit such as shown in Fig. 3C can also be used as the circuit of the second delay portion 2.

In Fig. 3C, C1 to C4 are stray capacitances formed by wiring patterns, etc., in the LSI. When the values of these capacitances (determined by the lengths of the wiring patterns) are made different, and a signal transmission delay time (from the input of the NOR gate 18 to the input of the NOR gate 19) of the NOR gate 18 is thus varied in 0.25 steps, the function equivalent to the circuit shown in Fig. 3B can be obtained.

In the parallel system of Fig. 2A, the selection process for the phase adjust is performed as follows. First, all latches including the address type scan in/out latch circuits 3a to 3d in the apparatus 0 are cleared to a set state (for example, "1") by the set signal (SET). Next, the scan address signal (SAD) is applied to the decoder 4 and the scan in data (SI) is input to sequentially select the natural scan address (Sada to Sadd) for the latches for which the content is to be inverted ("1" → "0"), among the latches 3a to 3d.

Accordingly, the content of the desired latch-(es) can be inverted from "1" to "0" and, finally, any selection signal can be set in the latches 3a to 3d.

Alternatively, the above-mentioned set signal (SET) may be made a reset signal (which clears the content of the latch to zero) when using each scan in/out latch. In this case, the scan in circuit is formed such that the content of the latch is inverted from "0" to "1".

In the scan out operation, the scan out signal (SO) carries out the input of the scan addresses Sada to Sadr of the sequential decoder 4 from all latch circuits 3a to 3r to the corresponding terminals, and gathers the signals from the scan out outputs Soa to Sor in a dot OR manner, to be output.

Alternatively, if the latch circuits 3a to 3r cannot operate in the dot OR manner as a TTL circuit, the above-mentioned SO is output via an OR gate.

When the phase adjusting circuit using a parallel scan as shown in Fig. 2A is formed as mentioned above, the controlling portion of the apparatus 0, not shown in the drawing, is operated as follows. In the initial setting of the apparatus 0, for example, the set signal (SET) is applied to all latch circuits 3a to 3r, when the scan in signal (SI) is sequentially input together with the scan address signal (SAD), so that the selection data is set in the latch circuits 3a to 3r. Then, the delay time corresponding to the selection data is selected by the first delay portion 1 and the second delay portion 2. Thus, a delayed clock signal CLK1, having a delay in the range of 0 to $(m - 1/2^p)$ relative to *CLK0 in $1/2^p$ steps, is sent via the OR gate 5 (functioning as a buffer) to the input terminals *CLKe to *CLKr of the other latch circuits 3e to 3r of the apparatus 0.

Accordingly, the signals SET, SI, SAD for selecting and setting the delayed clock CLK1 can directly use a conventional scan in/out function, thus minimising an increase of the input/output terminals in the apparatus 0. If the conventional SAD is more than 3 bits, this leads to an increase in the four scan address Sada to Sadd, so that the increase of the SAD is only one bit at maximum. Thus, the number of input/output terminals at the apparatus or LSI level is not greatly increased, so other functions can be easily included in the LSI, and the delay time for the clock signal *CSK0 can be set by the external selection signal. Therefore, a clock phase adjusting circuit having good operational characteristics can be realised.

The latch circuits 3a to 3d which hold the selection signal applied to the first delay portion 1 and the second delay portion 2 can also be realised by selecting from and holding another portion (for example, a control portion) of the LSI.

Next, an explanation will be given of a modified system using a series-type scan instead of the parallel-type scan-in, by referring to Fig. 2B.

A scan in signal (SIa) and a scan out signal (SOa) shown in Fig. 2B are connected in series and in a ring manner with shift-type scan in/out latch circuits 3aa to 3ar, together with any other shift registers included in an external control portion or controlled in the external control portion, to form a scan chain. The above-mentioned shift registers also supply the scan clock signal (SCK) output from the scan clock generating portion under the control of another control portion to the above-mentioned scan in/out latch circuit 3aa to 3ar similarly. Therefore, the above-mentioned SIa data is incremented by one step at every one clock of the SCK, so that the above-mentioned SIa data is circulated in the scan chain by the scan clock SCK. The length of the chain is the sum $(r + s)$ of the number r of scan in/out latch circuits 3aa to 3ar and the number of stages of any shift register also included, as mentioned above.

Therefore, the data set in the shift register by the control portion is shifted by the application and the control of the scan clock (SCK), and can be set in any of the scan in/out latch circuits 3aa to 3ar on the scan chain or in the above-mentioned shift register(s).

That is, the above-mentioned external control portion sets the signals corresponding to PS0 to PS2, PS10, as in the parallel system, in the first delay portion 1 and the second delay portion 2 and sets the above-mentioned SIa in the scan in/out latch circuits 3aa to 3ad, to input the selection data for phase adjustment. Then, the delay time corresponding to the selection data is produced in the first delay portion 1 and the second delay portion 2, as in the above-mentioned parallel system, in the range of 0 to $(m - 1/2^p)$ relative to *CLK0. The delay clock signal CLK1 having any delay time in $1/2^p$ steps within this range is sent via the OR gate 5 of the buffer function to input terminals *CLKal to *CLKar of the other latch out circuits 3al to 3ar in the apparatus 0a.

Note that during the scan in/out, system clock CLK1 used for the logic operation is not necessary, and during the logic operation using CLK1, the scan in/out operation is not carried out, so that the phase adjust condition of the CLK1 does not vary.

However, when the scan in/out and the logic operation are alternately repeated, the selection data for CLK1 must be set at a constant value each time by the scan in operation.

Thus, when the data in the once set scan in/out latch circuits 3aa to 3ad and the logic operation following the scan in/out executed thereafter are alternately repeated, the following occurs. If an insertion or a detour of the above−mentioned latch circuits 3aa to 3ad into the scan chain by another control signal and the application/the stop maintenance of the scan clock (SCK) are interlocked, the latch circuits 3aa to 3ad are inserted in the scan−in only at the time of the clock phase adjust. Thereby, the selection data by the scan in signal (SIa) is set, and thereafter, the latch circuits 3aa to 3ad are made to withdraw from the scan chain so that the selection data may be fixed and held.

Next, embodiments of the present invention will be explained with reference to Fig. 4A and Fig. 4B.

In the Fig. 2A or 2B system, selection data input as the scan in signal (SI or SIa) is processed as an image of firmware data. This data is held in part of the control portion stored together with the control program in the memory portion belonging, for example, to an external controlling portion. However, in the present invention, the selection data for clock phase adjustment specific to each apparatus is stored in the apparatus, here another memory portion (hereinafter called MEM 6b, c) provided in the apparatus 0b, 0c. For example, at the initial set time for each apparatus, the external control portion once sends the predetermined selection data set in MEM 6b, c to each apparatus 0b, 0c as the scan out data (SO or SOa),regardless of the selection data in each apparatus. Thereafter, the scan out data (SO, SOa) are used as the scan in data (SI, SIa), only by a predetermined process, so that a clock phase adjusting system which operates in a similar way to the systems shown in Figs. 2A and 2B can be provided.

In the clock adjusting systems using a parallel scan in/out shown in Fig. 4A, or a series scan in/out shown in Fig. 4B, symbols common to the above− mentioned systems denote the same elements.

The parallel system shown in Fig. 4A differs from that of Fig. 2A in that the MEM 6b is added to the construction of the apparatus 0.

Addresses A0 to An in this MEM 6b use one portion of the scan address signal (SAD) applied to the decoder 4b, but are allocated so as to not overlap the address of the scan out latch circuits 3a to 3r.

If necessary, a chip select (CS) signal forming circuit may be added.

Further, if necessary, an address signal exclusive to the MEM 6b may be used.

In the present embodiment, the selected data in the first delay portion 1 and the second delay portion 2, set in the latch circuits 3a to 3d in Fig. 2A, are accessed to the MEM 6b to be output from the data output terminal (DO) and to be read out to an external control portion (not shown in the drawing) as the scan out signal (SO). Thereafter, as in the system shown in Fig. 2A, the data which the external controlling portion reads out by the above−mentioned SO is input as the above− mentioned SI. The delay time according to the selected data due to the above−mentioned SI is applied to the input *CLK0 in the first delay portion 1 and the second delay portion 2 to form the phase−adjusted output CLK1.

As the data to be stored in the memory MEM 6b there is stored the signal which is necessary for the write enable (We) for the MEM 6b, the data input (Di), and addresses (A0 to An) and which is output and supplied by the above−mentioned control portion.

The series system of Fig. 4B differs from Fig. 2B in that the MEM 6c is added.

For memorising the selected data in the MEM 6c, a latch circuit 3ae in the scan chain formed as in Fig. 2B is allocated to a data input (Di), the latch circuits 3af to 3aj are allocated to the addresses (AO to An), and the latch circuit 3ak is allocated to the data output (Do).

The above−mentioned external control portion, not shown in the drawings, executes the scan in by applying the scan clock (SCK) using the selection data as the scan in data (SIa). The scan in is applied via a latch circuit 3ae to the data input (Di) of the MEM 6c and via the latch circuits 3af to 3aj to the address (A0 to An) of the MEM 6c, and the selected data is stored in the MEM 6c by applying the write enable (We).

To adjust the phase, the selection data stored in the MEM 6c is shifted by the above−mentioned control portion applying the scan clock (SCK) sequentially to the MEM 6c, using the above−mentioned write enable as a disenable (that is, read out mode). Then, the selection data due to the read out signal (Do) according to the address (A0 to An) supplied via the latch circuits 3af to 3aj is set in the latch circuit 3ak to be read out as the scan out signal (SOa).

At this time, the CLK1 signal is necessary for taking in the read out signal (Do) of the MEM 6c to the latch 3ak; however, the phase of the CLK1 signal at this time need not be adjusted.

When the selection data is set, via the external control portion not shown in the drawing and by the shift operation, in the latch circuits 3aa to 3ad as the scan in data (SIa) and input to the first delay portion 1 and the second delay portion 2 as PS0 to PS2 and PS10, a clock phase delay system can be obtained which sends out a delayed clock CLK1 with a delay relative to the original clock *CLK0 in accordance with the predetermined selection data stored in the MEM 6c.

Also in this embodiment, the following function may be allowed. That is, the latch circuits 3aa to 3ad and 3ae to 3ak are made valid only when operating the scan in/out for the selection data, the selection data is read out from the MEM 6c and withdrawn from the scan chain, except for setting in the first delay portion 1 and the second delay portion 2, so that the selection data in the latch circuits 3aa to 3ad is made fixed and held.

The above−mentioned explanation is for the case where one system is used for obtaining a single clock signal CLK1 phase−adjusted from *CLK0. However, if necessary, there may be provided a plurality of systems, in a similar way to that shown in Fig. 1B in the prior art, for obtaining multiple clock signals each phase−adjusted with a different phase.

As explained in detail above, some important features of a clock phase adjusting system embodying the present invention are as follows. In a logic circuit providing a scan in/out means, $(n+1)$ special scan out latch circuits are provided in the scan in/out latch circuits, and two delay means are provided. The first delay means outputs an input clock as a delay clock with a selected delay of from 0 to $m-1$ (where $m = 2^n$) steps in accor−dance with an n bit selection signal. The second delay means further delays the clock signal in $1/2^p$ steps in accordance with a p−bit selection signal. The second delay means is connected in cascade with the first delay means, so that delayed clock signals in $1/2^p$ steps can be output in response to the input clock signal simply by setting, in the above−mentioned $(n+p)$ scan in/out latch circuits, the selection data used to determined the amount of delay. Therefore, compared with a conventional clock phase adjusting means, by means of the present invention, the number of terminals required for external signals can be kept to a minimum, so co−existence with the LSI is facilitated. Also, a delay time can be finely and selectively set by an external control means as the phase adjusting means, and can be altered without any need for accompanying connection changes.

**Claims**

1. A clock phase adjusting system, comprising: −
   delay means (1, 2) connected to receive an input clock signal (CLK0), for delaying the input clock signal by a selected time in accordance with a given delay time selection signal and for outputting a delayed clock signal (CLK1), said delay means including: −
   first delay means (1) for coarse adjustment, said first delay means selectively outputting the input clock signal (CLK0) in accordance with an n−bit selection signal (PS0 ... PS2), wherein n is an integer greater than or equal to one, as a first delay clock signal;
   second delay means (2) for fine adjustment, said first and second delay means connected in cascade, said second delay means selectively outputting the first delay clock signal in accordance with a p−bit selection signal (PS10, PS11), wherein p is an integer greater than or equal to one, as said delayed, clock signal (CLK1) having the selected delay time;
   $n+p$ scan in/out latch circuits (3a ... 3d, 3aa ... 3ad), connected to said delay means (1, 2) for providing said delay time selection signal to said delay means; and
   means (4b) connected to said scan in/out latch circuits (3a ... 3d, 3aa ... 3ad), for applying a setting signal and for setting selection data corresponding to said delay time selection signal to said $n+p$ scan in/out latch circuits during a scan−in operation;
   characterised in that: −
   said first delay means (1) produces said first delay clock signal having a delay in a range of $m = 2^n$ steps in accordance with the n−bit selection signal, and said second delay means (2) produces said delayed clock signal (CLK1) having a further delay in a range of $2^p$ steps each $1/2^p$ of the size of the steps in the first delay means, in accordance with the p−bit selection signal;
   and in that: −
   memory means (6b, 6c) are provided for inputting and outputting selection data for said first and second delay means (1, 2) in accordance with alternatively either an address signal which is input via another scan in/out latch circuit (3af ... 3aj) other than said $n+p$ scan in/out latch circuits (3a ... 3d, 3aa ... 3ad) or an address signal which is input for a special purpose; and wherein, at the time of a scan−in operation in said logic circuit, said selection data which is output by an address signal for said memory means (6b, 6c) is set in said $n+p$ scan in/out latch circuits (3a ... 3d, 3aa ... 3ad).

2. A clock phase adjusting system according to claim 1, wherein said first delay means (1) comprises $m-1$ cascaded OR/NOR gates (11), a first of which receives said input clock signal (CLK0), m OR gates (12), a first of which receives said input clock signal (CLK0) and others receiving the outputs of the $m-1$ OR/NOR gates, respectively, and a decoder (13), which decodes said $n-$bit selection signal into one of m outputs received respectively by the m OR gates (12).

3. A clock phase adjusting system according to claim 1 or 2, wherein said second delay means (2) comprises a NOR gate (14, 18) having an input terminal receiving said first delay clock signal from said first delay means (1) and having an emitter follower output terminal connected in parallel to receive a control signal derived from said $p-$bit selection signal (PS10, PS11) and to a capacitance (C0, C1, C2, C3, C4).

4. A clock phase adjusting system according to claim 3, further comprising a second NOR gate (15) having an input terminal receiving an output from said NOR gate (14), and having an emitter follower output terminal connected in parallel to receive a control signal derived from said $p-$bit selection signal (PS10, PS11) and to a capacitance (CO).

5. A clock phase adjusting system according to claim 4, wherein each of said NOR gate (14) and said second NOR gate (15) has a first emitter follower output terminal connected in parallel to receive another control signal derived from said $p-$bit selection signal (PS10, PS11) and to another capacitance (CO').

6. A clock phase adjusting system according to claim 3, wherein said NOR gate (18) is one of $2^p$ such NOR gates having first input terminals receiving in parallel said first delay clock signal and second input terminals receiving respective control signals derived from said $p-$bit selection signal (PS10, PS11).

7. A clock phase adjusting system according to claim 6, wherein said capacitances (C1, C2, C3, C4) connected to the $2^p$ NOR gates are stray capacitances having different respective values.

8. A clock phase adjusting system according to any preceding claim, wherein the delay range in said first delay means is 0 to $m-1$ steps and the delay range in said second delay means is 0 to $1-1/2^p$ steps, whereby the total delay given to said delayed clock signal (CLK1) is in the range 0 to $m-1/2^p$ steps.

**Patentansprüche**

1. Ein Taktphaseneinstellungssystem mit: –
Verzögerungsmitteln (1, 2), die verbunden sind, um ein Eingangstaktsignal (CLK0) zu empfangen zum Verzögern des Eingangstaktsignals um eine ausgewählte Zeit in Übereinstimmung mit einem gegebenen Verzögerungszeitauswahlsignal und zum Ausgeben eines verzögerten Taktsignals (CLK1), welche Verzögerungsmittel enthalten: –
ein erstes Verzögerungsmittel (1) zur Grobeinstellung, welches erste Verzögerungsmittel das Eingangstaktsignal (CLK0) in Übereinstimmung mit einem $n-$Bit$-$Auswahlsignal (PS0 ... PS2), wobei n eine ganze Zahl und größer als oder gleich eins ist, als erstes Verzögerungstaktsignal selektiv ausgibt;
ein zweites Verzögerungsmittel (2) zur Feineinstellung, welche ersten und zweiten Verzögerungsmittel in Kaskade verbunden sind, welches zweite Verzögerungsmittel das erste Verzögerungstaktsignal in Übereinstimmung mit einem $p-$Bit$-$Auswahlsignal (PS10, PS11), wobei p eine ganze Zahl und größer als oder gleich eins ist, als das genannte verzögerte Taktsignal (CLK1), das die ausgewählte Verzögerungszeit hat, selektiv ausgibt;
$n+p$   Scan$-$in/out$-$Verriegelungsschaltungen (3a ... 3d, 3aa ... 3ad), die mit den genannten Verzögerungsmitteln (1, 2) verbunden sind, zum Bereitstellen des genannten Verzögerungszeitauswahlsignals für die genannten Verzögerungsmittel; und
Mittel (4b), die mit den genannten Scan$-$in/out$-$Verriegelungsschaltungen (3a ... 3d, 3aa ... 3ad) verbunden sind, zum Zuführen eines Setzsignals und zum Setzen von Auswahldaten, die dem genannten Verzögerungszeitauswahlsignal entsprechen, für die genannten $n+p$ Scan$-$in/out$-$Verriegelungsschaltungen während einer Scan$-$in$-$Operation;
dadurch gekennzeichnet, daß: –
das genannte erste Verzögerungsmittel (1) das genannte erste Verzögerungstaktsignal, das eine Verzögerung in einem Bereich von m $= 2^n$ Schritten hat, in Übereinstimmung mit dem $n-$Bit$-$Auswahlsignal erzeugt, und das genannte zweite Verzögerungsmittel (2) das genannte verzögerte Taktsignal (CLK1), das eine weitere Verzögerung in einem Bereich von $2^p$ Schritten hat, wobei jedes $1/2^p$ von der Größe der Schritte bei dem ersten Verzögerungsmittel ist, in Übereinstimmung mit dem $p-$Bit$-$Auswahlsignal erzeugt;
und daß: –
Speichermittel (6b, 6c) vorgesehen sind, zum Eingeben und Ausgeben von Auswahl‒ daten für die genannten ersten und zweiten Verzögerungsmittel (1, 2) alternativ in Über‒ einstimmung entweder mit einem Adreßsignal, das über eine andere Scan‒in/out‒Verriege‒ lungsschaltung (3af ... 3aj) eingegeben wird, die eine andere als die genannten n + p Scan‒ in/out‒Verriegelungsschaltungen (3a ... 3d, 3aa ... 3ad) ist, oder mit einem Adreßsignal, das für einen speziellen Zweck eingegeben wird; und bei dem zu der Zeit einer Scan‒in‒ Operation in der genannten Logikschaltung die genannten Auswahldaten, die durch ein Adreßsignal für die genannten Speichermittel (6b, 6c) ausgegeben werden, in den genannten n + p Scan‒in/out‒Verriegelungsschaltungen (3a ... 3d, 3aa ... 3ad) gesetzt werden.

2. Ein Taktphaseneinstellungssystem nach An‒ spruch 1, bei dem das genannte erste Vezö‒ gerungsmittel (1) m ‒ 1 in Kaskade verbundene ODER‒/NOR‒Gatter (11) umfaßt, von denen ein erstes das genannte Eingangstaktsignal (CLK0) empfängt, m ODER‒Gatter (12), von denen ein erstes das genannte Eingangstakt‒ signal (CLK0) empfängt bzw. andere die Aus‒ gaben der m ‒ 1 ODER‒/NOR‒Gatter emp‒ fangen, und einen Dekoder (13), der das ge‒ nannte n‒Bit‒Auswahlsignal in eine von m Ausgaben dekodiert, die jeweilig von den m ODER‒Gattern (12) empfangen werden.

3. Ein Taktphaseneinstellungssystem nach An‒ spruch 1 oder 2, bei dem das genannte zweite Verzögerungsmittel (2) ein NOR‒Gatter (14, 18) umfaßt, das einen Eingangsanschluß hat, der das genannte erste Verzögerungstaktsignal von dem genannten ersten Verzögerungsmittel (1) empfängt, und einen Emitterfolgeraus‒ gangsanschluß hat, der parallel verbunden ist, um ein Steuersignal zu empfangen, das von dem genannten p‒Bit‒Auswahlsignal (PS10, PS11) abgeleitet ist, und mit einer Kapazität (C0, C1, C2, C3, C4) verbunden ist.

4. Ein Taktphaseneinstellungssystem nach An‒ spruch 3, das ferner ein zweites NOR‒Gatter (15) umfaßt, das einen Eingangsanschluß hat, der eine Ausgabe von dem genannten NOR‒ Gatter (14) empfängt, und einen Emitterfol‒ gerausgangsanschluß hat, der parallel ver‒ bunden ist, um ein Steuersignal zu empfangen, das von dem genannten p‒Bit‒Auswahlsignal (PS10, PS11) abgeleitet ist, und mit einer Ka‒ pazität (CO) verbunden ist.

5. Ein Taktphaseneinstellungssystem nach An‒ spruch 4, bei dem jedes der genannten NOR‒

Gatter (14) und der genannten zweiten NOR‒ Gatter (15) einen ersten Emitterfolgeraus‒ gangsanschluß hat, der parallel verbunden ist, um ein anderes Steuersignal zu empfangen, das von dem genannten p‒Bit‒Auswahlsignal (PS10, PS11) abgeleitet ist, und mit einer an‒ deren Kapazität (C0') verbunden ist.

6. Ein Taktphaseneinstellungssystem nach An‒ spruch 3, bei dem das genannte NOR‒Gatter (18) eines von $2^p$ solcher NOR‒Gatter ist, die erste Eingangsanschlüsse haben, die das ge‒ nannte erste Verzögerungstaktsignal parallel empfangen, und zweite Eingangsanschlüsse, die entsprechende Steuersignale empfangen, die von dem genannten p‒Bit‒Auswahlsignal (PS10, PS11) abgeleitet sind.

7. Ein Taktphaseneinstellungssystem nach An‒ spruch 6, bei dem die genannten Kapazitäten (C1, C2, C3, C4), die mit den $2^p$ NOR‒Gattern verbunden sind, Streukapazitäten sind, die unterschiedliche entsprechende Werte haben.

8. Ein Taktphaseneinstellungssystem nach ir‒ gendeinem vorhergehenden Anspruch, bei dem der Verzögerungsbereich in dem ge‒ nannten ersten Verzögerungsmittel 0 bis m ‒ 1 Schritte beträgt und der Verzögerungsbereich in dem genannten zweiten Verzögerungsmittel 0 bis $1 - 1/2^p$ Schritte beträgt, wodurch die Gesamtverzögerung, die dem genannten ver‒ zögerten Taktsignal (CLK1) erteilt wird, in dem Bereich von 0 bis $m - 1/2^p$ Schritten liegt.

**Revendications**

1. Système de réglage de le phase d'un signal d'horloge, comprenant :

des moyens à retard (1,2) connectés pour recevoir un signal d'horloge d'entrée (CLK0), pour retarder le signal d'horloge d'entrée d'un temps sélectionné conformément à un signal de sélection de retard donné et pour sortir un signal d'horloge retardé (CLK1),lesdits moyens à retard incluant:

un premier moyen à retard (1) pour un réglage approximatif, ledit premier moyen à retard sortant sélectivement le signal d'horloge d'entrée (CLK0) conformément à un signal de sélection à n bits (PS0,...,PS2),où n est un entier supérieur ou égal à un, en tant que premier signal d'horloge retardé;

un second moyen à retard (2) pour un réglage fin, lesdits premier et second moyens à retard étant connectés en cascade, ledit se‒ cond moyen à retard sortant sélectivement le premier signal d'horloge retardé conformément à un signal de sélection à p bits (PS10, PS11), où p est un entier supérieur ou égal à un, en tant que ledit signal d'horloge retardé (CLK1) ayant le retard sélectionné;

$(n+p)$ circuits de verrouillage à balayage d'entrée/de sortie (3a,...,3d, 3aa,...,3ad), connectés auxdits moyens à retard (1,2) pour fournir ledit signal de sélection de retard auxdits moyens à retard; et

un moyen (4b) connecté auxdits circuits de verrouillage à balayage d'entrée/de sortie (3a,...,3d, 3aa,...,3ad), pour appliquer un signal d'établissement et pour établir des données de sélection correspondant audit signal de sélection de retard auxdits $(n+p)$ circuits de verrouillage à balayage d'entrée/de sortie pendant une opération de balayage d'entrée;

caractérisé en ce que :

ledit premier moyen à retard (1) produit ledit premier signal d'horloge retardé ayant un retard dans une plage de $m = 2^n$ pas conformément au signal de sélection à n bits, et ledit second moyen à retard (2) produit ledit signal d'horloge retardé (CLK1) ayant un autre retard dans une plage de $2^p$ pas dont chacun égale $1/2^p$ de la longueur des pas dans le premier moyen à retard, conformément au signal de sélection à p bits;

et en ce que :

des moyens à mémoire (6b,6c) sont prévus pour entrer et sortir des données de sélection pour lesdits premier et second moyens à retard (1,2) conformément alternativement à un signal d'adresse qui est entré par un autre circuit de verrouillage à balayage d'entrée/de sortie (3af,...,3aj) autre que lesdits $(n+p)$ circuits de verrouillage à balayage d'entrée/de sortie (3a,...,3d, 3aa,...,3ad) ou à un signal d'adresse qui est entré dans un but spécial; et dans lequel, au temps d'une opération de balayage d'entrée dans ledit circuit logique, lesdites données de sélection qui sont sorties par un signal d'adresse pour lesdits moyens à mémoire (6b,6c) sont établies dans lesdites $(n+p)$ circuits de verrouillage à balayage d'entrée/de sortie (3a,...,3d,3aa,...,3ad).

2. Système de réglage de la phase d'un signal d'horloge selon la revendication 1, dans lequel ledit premier moyen à retard (1) comprend $(m-1)$ portes OU/NI (11) en cascade dont une première porte reçoit ledit signal d'horloge d'entrée (CLK0) m portes OU (12) dont une première porte reçoit ledit signal d'horloge d'entrée (CLK0) et les autres reçoivent les signaux de sortie des $(m-1)$ portes OU/NI, respectivement, et un décodeur (13), qui décode ledit signal de sélection à n bits en un des m signaux de sortie reçus respectivement par les m portes OU (12).

3. Système de réglage de la phase d'un signal d'horloge selon l'une quelconque des revendications 1 et 2, dans lequel ledit second moyen à retard (2) comprend une porte NI (14,18) ayant une borne d'entrée qui reçoit ledit premier signal d'horloge retardé dudit premier moyen à retard (1) et une borne de sortie d'émetteur suiveur connectée en parallèle pour recevoir un signal de commande dérivé dudit signal de sélection à p bits (PS10,PS11) et à des capacités (C0,C1, C2,C3,C4).

4. Système de réglage de la phase d'un signal d'horloge selon la revendication 3, comprenant en outre une seconde porte NI (15) ayant une borne d'entrée qui reçoit le signal de sortie de ladite porte NI (14), et ayant une borne de sortie d'émetteur suiveur connectée en parallèle pour recevoir un signal de commande dérivé dudit signal de sélection à p bits (PS10,PS11) et à une capacité (CO).

5. Système de réglage de la phase d'un signal d'horloge selon la revendication 4, dans lequel chacune desdites portes NI (14) et ladite seconde porte NI (15) a une première borne de sortie d'émetteur suiveur connectée en parallèle pour recevoir un autre signal de commande dérivé dudit signal de sélection à p bits (PS10,PS11) et à une autre capacité (CO').

6. Système de réglage de la phase d'un signal d'horloge selon la revendication 3, dans lequel ladite porte NI (18) est une des $2^p$ portes NI ayant des premières bornes d'entrée recevant en parallèle ledit premier signal d'horloge retardé et des secondes bornes d'entrée recevant les signaux de commande respectifs dérivés dudit signal de sélection à p bits (PS10,PS11).

7. Système de réglage de la phase d'un signal d'horloge selon la revendication 6, dans lequel lesdites capacités (C1,C2,C3,C4) connectées aux $2^p$ portes NI sont des capacités parasites ayant différentes valeurs respectives.

8. Système de réglage de la phase d'un signal d'horloge selon l'une quelconque des revendications 1 à 7, dans lequel la plage du retard introduit dans ledit premier moyen à retard est égale de 0 à $(m-1)$ pas et la plage du retard introduit dans ledit second moyen à retard est égale de 0 à $(1-1/2^p)$ pas, le retard total donné audit signal d'horloge retardé (CLK1) étant ainsi dans la plage de 0 à $(m - 1/2^p)$ pas.

# Fig.1A

# Fig.1B

## Fig.2A

# Fig.2B

# Fig.3A

Fig. 3B

Fig.3C

# Fig. 4A

EP 0 235 303 B1

# Fig. 4B

EP 0 235 303 B1